# EUROPÄISCHE PATENTSCHRIFT

(11) **EP 2 591 908 B1**
(45) Veröffentlichungstag und Bekanntmachung des Hinweises auf die Patenterteilung: **27.07.2016**
(21) Anmeldenummer: 12191368.5
(22) Anmeldetag: 06.11.2012
(51) Int. Cl.: B29C 55/18, H01B 3/44, B29C 43/00

(54) **Verfahren und Vorrichtung zur Herstellung eines Wickelbandes**
Method and device for producing a wrapping tape
Procédé et dispositif de fabrication d'une bande d'enroulement

(30) Priorität: 11.11.2011 DE 102011055262
(43) Veröffentlichungstag der Anmeldung: 15.05.2013
(73) Patentinhaber: LEONI Kabel Holding GmbH, 90402 Nürnberg (DE)
(72) Erfinder: Sikora, Manfred, 58553 Halver (DE); Klehm, Peter, 51515 Kürten (DE)
(74) Vertreter: Glück Kritzenberger Patentanwälte PartGmbB

(56) Entgegenhaltungen:
- EP-A2- 1 329 910
- US-A- 4 791 966

## Beschreibung

Die Erfindung betrifft ein Verfahren zur Herstellung eines Wickelbandes nach dem Oberbegriff des Anspruches 1 sowie eine zugehörige Vorrichtung nach dem Oberbegriff des Anspruches 9.

Verfahren zur Herstellung von Wickelbändern aus sinterfähigen Kunststoffen wie beispielsweise Polytetrafluorethylen sind aus dem Stand der Technik bekannt. Derartige Wickelbänder werden vorzugsweise für die Isolierung elektrischer Kabel und Leitungen eingesetzt. Die in der Regel durch Auswalzen hergestellten Wickelbänder werden meist wendelförmig mehrlagig bzw. überlappend aufgewickelt und die Ränder des Wickelbänder werden mit den darunter liegenden Lagen beispielsweise durch nachträgliches Sintern verbunden.

Von besonderer Bedeutung ist hierbei, dass die aus einem Wickelband hergestellte Isolierhülle nahezu spaltenfrei und kompakt ist und dass die Oberfläche glatt ist und keine Stoßkanten aufweist, welche Angriffspunkte für von außen wirkende mechanische Kräfte darstellen.

Aus der DE32 14 447 C2 beispielsweise ist ein ungesintertes Wickelband mit einer plankonvexen Querschnittsform bekannt, bei dem eine obere Begrenzungslinie gekrümmt und eine untere Begrenzungslinie gerade ist. Die Banddicke im mittleren Bereich des Bandes ist dabei im Vergleich zu den Rändern verstärkt. Durch überlappendes Aufwickeln des Wickelbandes, nämlich mit einer Überlappung der im Vergleich zur verstärkten Bandmitte dünneren Ränder, kann eine geschlossene, kompakte und oberflächenglatte Umhüllung erzeugt werden.

In der DE 41 03 540 C2 und der DE 102 01 833 A1 wird jeweils ein Verfahren zur Herstellung eines Wickelbandes mit einer von der Rechteckform abweichenden Querschnittsform angegeben. So offenbart die DE 41 03 540 C2 beispielsweise ein Verfahren, bei dem zunächst ein Bandmaterial mit mindestens der zweifachen Breite des Wickelbandes geformt und anschließend über eine Quetschtrennung getrennt wird, wodurch Wickelbänder mit einer zu den Kanten hin spitz zulaufenden Querschnittsform erzeugt werden.

Die DE 102 01 833 A1 stellt ein Verfahren zur Verfügung, bei dem eine zunächst aus einem Rohling ausgepresste Rundschnur mit kreisrundem Querschnitt zu einem Band ausgewalzt wird. Die Rundschnur wird dabei druckbelastet in einer radialen Richtung derart ausgewalzt, dass die im mittleren Teil des Bandes verbleibende Materialmenge größer ist als die zu den Bandkanten hin verbleibende Materialmenge. Wesentlich für dieses Verfahren ist, dass bei dem Walzvorgang die Oberfläche mindestens einer Walze druckbelastet verformt wird.

Nachteilig an dem in der DE 102 01 833 A1 angegebenen Verfahren ist zum einen, dass ausschließlich Rundschnüre mit kreisrundem Querschnitt ausgewalzt werden können, da es sonst zu Unregelmäßigkeiten in Dicke und Breite des Bandes kommen kann. Außerdem sind Gleichmäßigkeit und Qualität des Wickelbandes stark von den Materialeigenschaften der Walze, nämlich von deren Elastizität abhängig. Nimmt beispielsweise die Elastizität der Walze aufgrund Materialalterung ab, so kann dies sowohl Form als auch Qualität des Wickelbandes negativ beeinträchtigen

Aufgabe der vorliegenden Erfindung ist es daher, das aus dem Stand der Technik bekannte Verfahren zu verbessern. Die Aufgabe wird ausgehend von den Merkmalen des Oberbegriffes des Patentanspruches 1 durch dessen kennzeichnende Merkmale gelöst.

Die vorliegende Erfindung beschreibt ein Verfahren zur Herstellung eines Wickelbandes, bei dem aus einem Materialgemisch, vorzugsweise aus einem Gemisch aus ungesintertem Polytetrafluorethylenpulver und einem Gleitmittel zunächst ein zylinderförmiger Rohling gepresst wird. In einem nächsten Schritt wird der Rohling dann zu einem geringer dimensionierten monofilen Strang mit einer vorgegebenen Querschnittsform ausgepresst. Der monofile Strang wird anschließend in einer Kalanderwalzenanordnung mit zumindest einer ersten und einer zweiten starren Walze zu einem Wickelband ausgewalzt. Der wesentliche Aspekt des erfindungsgemäßen Verfahrens ist darin zu sehen, dass der monofile Strang einer auf der Umfangsfläche der zumindest zweiten Walze vorgesehenen umlaufenden Vertiefung zugeführt wird und mittels beider starren Walzen derart zu dem Wickelband ausgewalzt wird, dass das Wickelband zumindest teilweise eine durch die Vertiefung der zumindest zweiten starren Walze und die Umfangsfläche der ersten starren Walze vorgegebene Form annimmt. Die Querschnittsform des ausgepressten monofilen Stranges wird dabei näherungsweise auf die Form der umlaufenden Vertiefung abgestimmt.

In anderen Worten ausgedrückt wird der monofile Strang in die auf der Umfangsfläche der zumindest zweiten Walze vorgesehene umlaufende Vertiefung eingeführt. Die Vertiefung der zweiten Walze bildet zusammen mit der Umfangsfläche der ersten Walze einen Hohlraum aus, der quasi mit einer Walz- bzw. Gießform verglichen werden kann und letztlich formgebend für das Wickelband ist. Das Wickelband nimmt also zumindest teilweise die Form der durch die Vertiefung der zweiten Walze und die Umfangsfläche der ersten Walze gebildeten Form an.

Da es sich bei den Walzen um starre Walzen handelt und das Walzenmaterial, vorzugsweise Stahl fest und widerstandsfähig ist, ist die Form der umlaufenden Vertiefung auch unter extremer Beanspruchung gleichbleibend. So ist beispielsweise aufgrund von Druckbeanspruchungen des Walzenpaares keine Veränderung der Oberfläche zu erwarten. Dadurch wird eine immer gleich bleibende Formgebung und Qualität des Wickelbandes gewährleistet. Mit dem erfindungsgemäßen Verfahren wird daher insbesondere auch bei ausgedehnter Betriebsdauer bzw. bei langem Einsatz der verwendeten Walzen ein sicherer, stabiler und dennoch einfacher Herstellungsprozess zur Verfügung gestellt.

Besonders vorteilhaft wird die Querschnittsform des monofilen Stranges, welcher zunächst aus dem Rohling ausgepresst wird, auf die Form der Vertiefung abgestimmt, so dass beispielsweise die relative Längen- und/oder Breitenzunahme des monofilen Stranges während des Auswalzens zum Wickelband vorbestimmt werden kann und somit der Faktor für Längen- und/oder Breitenzunahme definiert bzw. reguliert werden kann.

Besondere Vorzüge ergeben sich, wenn der auf der Umfangsfläche der zumindest zweiten Walze vorgesehenen umlaufenden Vertiefung ein monofiler Strang mit im Wesentlichen ovaler Querschnittsform oder ein monofiler Strang mit im Wesentlichen polygoner, vorzugsweise rechteckiger Querschnittsform zugeführt wird. Abhängig von der Form der umlaufenden Vertiefung der zumindest zweiten Walze, von der Art, Form und Größe des herzustellenden Wickelbandes, sowie von dem gewünschten Faktor für Längen- und/oder Breitenzunahme können monofile Stränge unterschiedlichster Querschnittsformen zugeführt werden. Neben der grundsätzlichen Querschnittsform ist ebenso die Querschnittsgröße, nämlich bezogen auf Länge und Breite wählbar. So kann bei im Wesentlichen ovalen Querschnittsformen das Verhältnis von Breite b zu Länge I des Querschnitts bevorzugt in einem Bereich von 1:1,05 bis 1:10, besonders bevorzugt in einem Bereich von 1:1,1 bis 1:3, insbesondere bevorzugt bei 1:2 liegen. Bei polygonen, näherungsweise rechteckigen Querschnittsformen kann das Verhältnis von Breite b zu Länge I bevorzugt in einem Bereich von 1:1 bis 1:15, besonders bevorzugt in einem Bereich von 1:1 bis 1:10, insbesondere bevorzugt bei 1:5 liegen.

Der ausgepresste monofile Strang wird bevorzugt mittels einer Zuführungs- und Positionierungseinrichtung der auf der Umfangsfläche der zumindest zweiten Walze vorgesehenen umlaufenden Vertiefung zugeführt, besonders bevorzugt wird der monofile Strang zentrisch zugeführt, wobei die "zentrische Zuführung" im Sinne der vorliegenden Erfindung im Folgenden kurz erläutert wird. Jede umlaufende Vertiefung weist im Prinzip einen Bodenabschnitt und Wandabschnitte auf und kann mit einer senkrecht zur Längsachse der Walze und durch den Bodenabschnitt der Vertiefung verlaufenden Schnittebene quer zur Walze "geschnitten" werden. Diese Schnittebene stellt eine Symmetrieebene der Vertiefung bzw. eine Symmetrieachse bezüglich der Querschnittsform der Vertiefung dar. Die Zuführung des monofilen Stranges in die Vertiefungen der Walze mit Hilfe der Zuführungs- und Positionierungseinrichtung erfolgt an einer gedachten Schnittlinie dieser Symmetrie- bzw. Schnittebene mit dem Bodenabschnitt der Vertiefung, nämlich zentrisch.

Während des ersten Verfahrensschrittes, nämlich dem Pressen eines Rohlings in einer Rohlingspresse kann der Pressdruck in der Rohlingspresse über eine Druckmess und - regelungseinrichtung bestimmt und für die Dauer eines definierten Zeitraumes auf einem vorgegebenen Wert gehalten werden. Ebenso kann der gepresste zylinderförmige Rohling nach dem Entnehmen aus der Rohlingspresse optional zunächst in eine Träger- und Stützhülse eingeschoben werden. Mittels der Träger- und Stützhülse, welche beispielsweise in Form eines Plexiglasrohres ausgebildet sein kann, kann der Rohling in besonders einfacher und handlicher Weise der Monofilpresse zugeführt werden. Außerdem stellt die Träger- und Stützhülse eine praktische und sichere Aufbewahrungs- und Lagerungsmöglichkeit für Rohlinge dar.

In einer bevorzugten Ausführungsform der vorliegenden Erfindung wird der monofile Strang in der Monofilpresse mittels einer Düse mit vorgegebener Austrittsöffnung ausgepresst, wobei die Pressgeschwindigkeit und/oder das Reduktionsverhältnis reguliert werden. Eine derartige Auspressung mittels Düsen wird gemeinhin als Extrusion bezeichnet. Die Extrusion stellt im Wesentlichen ein kontinuierliches Verfahren dar, bei dem das zu verarbeitende Material durch eine spezielle Düse gepresst wird und dabei Körper mit dem Querschnitt der Düse in beliebiger Länge entstehen. Besonders bevorzugt wird in der vorliegenden Erfindung mittels unterschiedlich geformter Düsen bzw. Austrittsöffnungen der Düsen der monofile Strang mit vorgegebener bzw. gewünschter und näherungsweise an die Vertiefung der Walze angepasster Querschnittsform ausgepresst, wobei die Querschnittsform des ausgepressten monofilen Stranges und die Querschnittsform der Austrittsöffnung der Düse entsprechend gleich sind.

Die vorliegende Erfindung umfasst ebenso eine Vorrichtung zur Herstellung eines Wickelbandes nach dem angegebenen Verfahren. Die Vorrichtung umfasst zumindest eine Rohlingspresse, wenigstens eine Monofilpresse mit einer Düse aufweisend eine vorgegebene Austrittsöffnung und eine Kalanderwalzenanordnung mit zumindest einer ersten und einer zweiten starren Walze, dadurch gekennzeichnet, dass wenigstens die zweite starre Walze zumindest eine umlaufende Vertiefung auf ihrer Umfangsfläche aufweist.

Die beiden starren Walzen sind im Wesentlichen zylinderförmig und vorzugsweise aus Stahl hergestellt. Beispielsweise können die starren Walzen aus Stahl mit unterschiedlichen Härtegraden hergestellt sein. Alternativ oder zusätzlich können die Walzen eine Oberflächenbeschichtung aufweisen. Die erste Walze weist beispielsweise eine glatte Oberfläche auf, kann alternativ aber analog zur zweiten Walze, über umlaufende Vertiefungen auf ihrer Umfangsfläche verfügen. Bevorzugt ist zumindest die erste Walze mit einem geeigneten Antrieb versehen. Die zweite Walze wird entweder über die erste Walze angetrieben oder verfügt alternativ ebenso über einen eigenen Antrieb. Die Kalanderwalzenanordnung kann beispielsweise zusätzliche Walzen wie einen Abnehmer, Aufwickler und Führungsrollen umfassen.

Die für das Verfahren zur Herstellung eines Wickelbandes geltenden Vorteile, welche unter den entsprechenden Aspekten betreffend das Verfahren bereits genannt wurden und auf die hier insbesondere verwiesen wird, beziehen sich ebenso in analoger Weise auf die Vorrichtung zur Durchführung des Verfahrens.

Besondere Vorteile ergeben sich, wenn die Vorrichtung zusätzlich eine Zuführungs- und Positionierungseinrichtung zur Zuführung des ausgepressten monofilen Stranges in die umlaufende Vertiefung der zweiten Walze umfasst. In einer weiteren bevorzugten Ausführungsform der vorliegenden Erfindung weist die Düse der Monofilpresse eine Austrittsöffnung mit im wesentlichen ovaler Querschnittsform auf, wobei das Seitenverhältnis von Länge zu Breite der Austrittsöffnung in einem Bereich von 1,05:1 bis 2:1 liegt. Alternativ weist die Düse eine Austrittsöffnung mit im wesentlichen polygonem, vorzugsweise rechteckförmigem Querschnitt auf, wobei das Seitenverhältnis von Länge zu Breite der Austrittsöffnung in einem Bereich von 1:1 bis 10:1 liegt.

Bevorzugt sind zwei, drei oder mehrere umlaufende Vertiefungen auf der Umfangsfläche der zumindest zweiten Walze ausgebildet, wobei die umlaufenden Vertiefungen entlang einer Längsachse der Walze verteilt angeordnet sind und jede umlaufende Vertiefung eine vorgegebene Querschnittsform aufweist. Eine durch die Vertiefung verlaufende und senkrecht zur Längsachse der Walze ausgerichtete Schnittebene stellt dabei eine Symmetrieachse bezüglich der Querschnittsform der Vertiefung dar.

Bevorzugt weist der Querschnitt der umlaufenden Vertiefung im Wesentlichen die Form eines Kreisabschnittes bzw. Kreissegmentes auf. Je nach Kreisradius, Segmenthöhe, Mittelpunktswinkel und Länge des Kreisbogens sind die genaue Form, die Fläche und die Größe des kreissegmentförmigen Querschnittes der Vertiefungen frei wählbar und es stehen somit Vertiefungen in unterschiedlichen Formen und Größen zum Auswalzen verschieden dimensionierter Wickelbänder zur Verfügung. In alternativen Ausführungsformen kann der Querschnitt der umlaufenden Vertiefungen jedoch auch im Wesentlichen vieleckig mit beispielsweise spitz zulaufenden Ecken geformt sein.

Die Erfindung soll nachfolgend anhand von Ausführungsbeispielen im Zusammenhang mit den Figuren näher erläutert werden. Zudem ergeben sich Weiterbildungen, Vorteile und Anwendungsmöglichkeiten der Erfindung auch aus der nachfolgenden Beschreibung der Ausführungsbeispiele und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Es wird aber ausdrücklich darauf hingewiesen, dass die Erfindung keinesfalls auf die angegebenen Beispiele beschränkt sein soll. Es zeigen
- Fig. 1: eine schematische Übersichtsdarstellung über das erfindungsgemäße Fertigungsverfahren,
- Fig. 2: eine schematische Schnittdarstellung durch eine Walze mit umlaufenden Vertiefungen,
- Fig. 3a: den Querschnitt durch einen monofilen Strang,
- Fig. 3b: den Querschnitt durch eine weitere Ausführungsform eines monofilen Stranges,
- Fig. 3c: den Querschnitt durch eine weitere Ausführungsform eines monofilen Stranges,
- Fig. 4: den Querschnitt eines nach dem erfindungsgemäßen Verfahren hergestellten Wickelbandes.

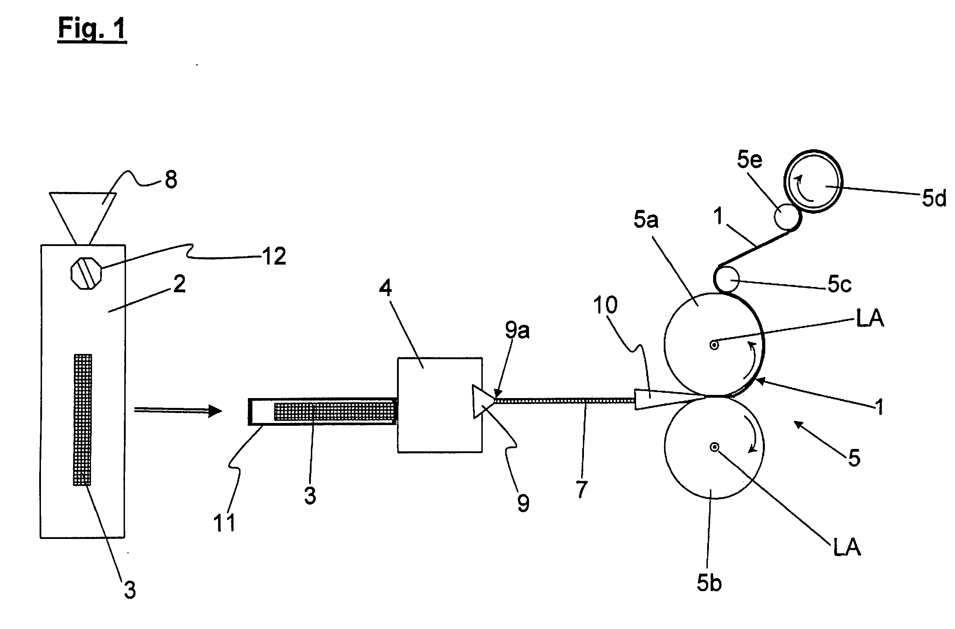

Bei dem in der Figur 1 in einer schematischen Übersichtsdarstellung gezeigten erfindungsgemäßen Verfahren zur Herstellung eines Wickelbandes 1 wird in einem ersten Verfahrensschritt ein Materialgemisch, vorzugsweise ein Gemisch aus ungesintertem Polytetrafluorethylenpulver, einem Gleitmittel und wahlweise einem oder mehrerer Farbstoffe mit Hilfe einer Einfüllvorrichtung 8 in eine Rohlingspresse 2 eingefüllt. Mittels Pressung in der Rohlingspresse 2 wird ein zylinderförmiger Rohling 3 hergestellt. Im dargestellten Beispiel wird zum Pressen des Rohlings 3 vorzugsweise der Pressdruck mittels einer Druckmess und -regelungseinrichtung 12 kontrolliert und für eine definierte Zeit konstant gehalten.

Im dargestellten Beispiel wird die Rohlingspresse 2 nach der Pressung des Rohlings 3 geöffnet und der zylinderförmige Rohling 3 wird in eine Träger- und Stützhülse 11 eingeführt bzw. eingedrückt. Die Träger- und Stützhülse 11 ist beispielsweise in Form eines Rohres ausgebildet und aus einem Kunststoffmaterial hergestellt, welches beispielsweise transparent ausgebildet ist. Vorzugsweise ist die Träger- und Stützhülse 11 in Form eines Plexiglasrohres realisiert. Aus Übersichtsgründen ist dieser Schritt in der Figur 1 nicht explizit dargestellt. In dem Plexiglasrohr 11 kann der Rohling bis zur Weiterverarbeitung auch aufbewahrt und gelagert werden.

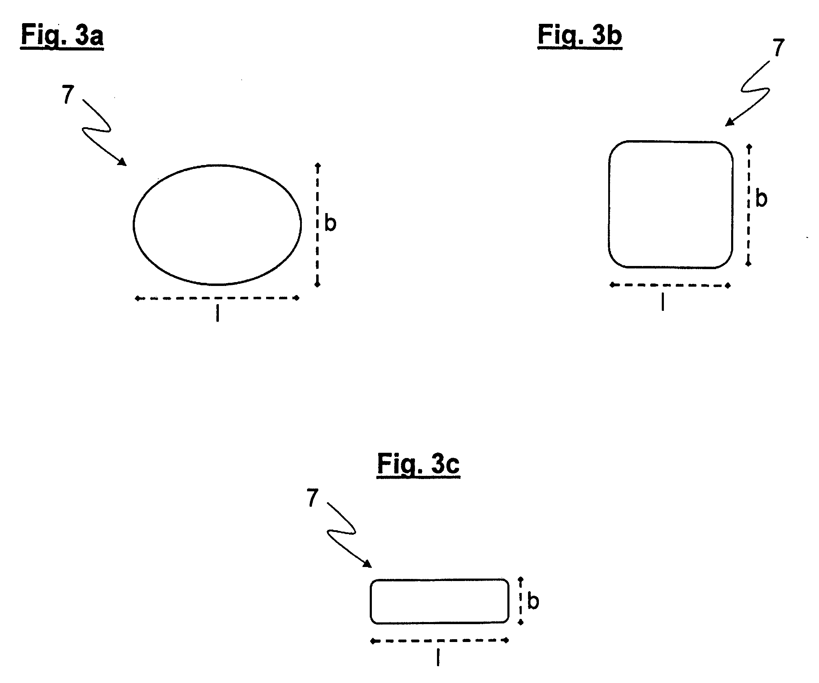

Der in dem Plexiglasrohr 11 befindliche Rohling 3 wird in einem weiteren Schritt des erfindungsgemäßen Verfahrens (in der Figur 1 hinter dem Doppelpfeil gezeigt) einer Monofilpresse 4 umfassend zumindest eine Düse 9, vorzugsweise eine Spritzdüse mit einer vorgegebenen Austrittsöffnung 9a, zugeführt. Dazu wird das Plexiglasrohr 11 vorzugsweise in horizontaler Ausrichtung auf entsprechende Halterungen an der Monofilpresse 4 aufgelegt und der Rohling 3 wird beispielsweise mittels eines Schiebers oder Stempels aus dem Plexiglasrohr 11 herausgedrückt und zum Beispiel über einen entsprechenden Einführzylinder an der Monofilpresse 4 eingeschoben und auf diese Weise der Monofilpresse 4 zugeführt. Mittels der Düse 9 wird ein geringer dimensionierter monofiler Strang 7 mit einer vorgegebenen Querschnittsform ausgepresst. Vorzugsweise wird darauf geachtet, dass das Auspressen des monofilen Stranges 7 sowohl mit einer definierten Geschwindigkeit als auch mit einem definierten Reduktionsverhältnis durchgeführt wird. In bevorzugten Ausführungsformen wird ein monofiler Strang 7 mit im Wesentlichen ovaler Querschnittsform oder ein monofiler Strang 7 mit im Wesentlichen polygoner, besonders bevorzugt rechteckiger Querschnittsform ausgepresst. Verschiedene mögliche Querschnittsformen des ausgepressten monofilen Stranges sind in den Figuren 3a bis 3c dargestellt.

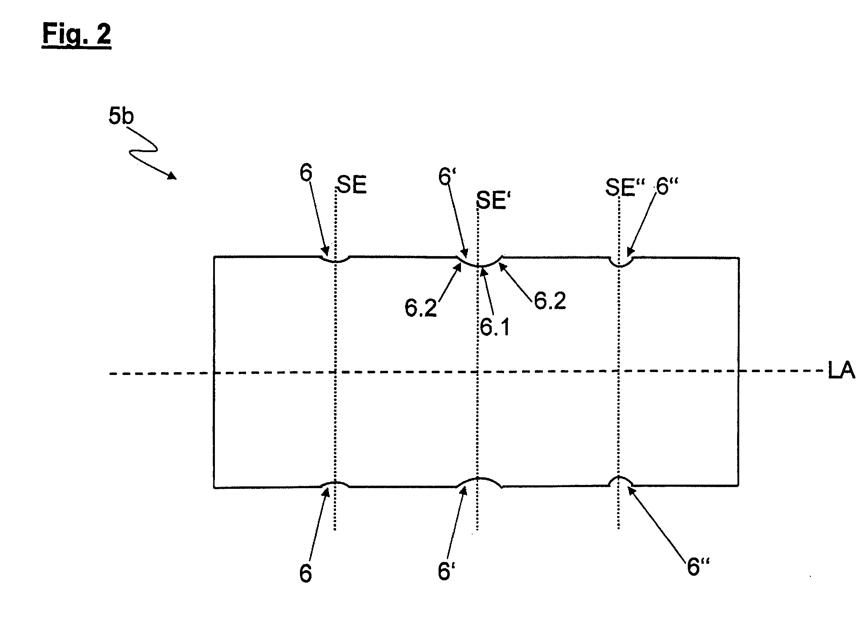

In einem letzten Schritt des Verfahrens wird der monofile Strang 7 mit vorgegebener Querschnittsform in einer Kalanderwalzenanordnung 5 mit zumindest einer ersten und einer zweiten starren, jeweils eine Längsachse LA aufweisenden Walze 5a, 5b zu dem Wickelband 1 ausgewalzt. Erfindungsgemäß wird der monofile Strang 7 dazu einer auf der Umfangsfläche der zumindest zweiten Walze 5b vorgesehenen umlaufenden Vertiefung 6 (in der Figur 2 dargestellt) zugeführt und mittels beider starrer Walzen 5a, 5b derart zu dem Wickelband 1 ausgewalzt, dass das Wickelband 1 zumindest teilweise eine durch die Vertiefung 6 der zumindest zweiten Walze 5b und die Umfangsfläche der ersten Walze 5a vorgegebene Form annimmt. Die Querschnittsform des ausgepressten monofilen Stranges 7 wird dabei näherungsweise auf die Form der Vertiefung 6 abgestimmt.

Die Zuführung des monofilen Stranges 7 in die umlaufende Vertiefung 6 der zweiten Walze 5b der Kalanderwalzenanordnung 5 erfolgt bevorzugt mittels einer Zuführungs- und Positionierungseinrichtung 10, nämlich einem Führungskeil. Über den Führungskeil 10 kann der monofile Strang 7 an einer exakt definierten Position der Vertiefung 6 auf der Umfangsfläche der zweiten Walze 5b zugeführt werden. Insbesondere wird der monofile Strang 7 mit Hilfe der Zuführungs- und Positionierungseinrichtung 10 zentrisch in eine entsprechende umlaufende Vertiefung 6 auf der Umfangsfläche der zweiten Walze 5b eingeführt, wie es aus der Figur 2 und der dazugehörigen Beschreibung näher hervorgeht.

Im dargestellten Ausführungsbeispiel handelt es sich bei beiden Walzen 5a, 5b um Stahlwalzen, wobei die erste Walze 5a zylindrisch ist und über einen Antrieb verfügt und die zweite Walze 5b als formgebende Walze mit umlaufenden Vertiefungen 6 ausgebildet ist. Vorzugsweise weist die zweite Walze 5b zusätzlich einen Kunststoffeinsatz zur Schlupfregelung auf. Die Kalanderwalzenanordnung 5 des dargestellten Beispieles umfasst neben der ersten und zweiten Walze 5a, 5b zusätzlich einen Abnehmer 5c und einen Aufwickler 5d mit Führungsrolle 5e zum Aufwickeln des fertig gestellten Wickelbandes 1.

In der Figur 2 ist eine schematische Längsschnittdarstellung durch die formgebende Walze 5b der Figur 1 gezeigt. Im dargestellten Beispiel weist die Walze 5b mit einer Längsachse LA auf ihrer Umfangsfläche drei umlaufende Vertiefungen 6, 6', 6" auf, welche entlang der Längsachse LA der Walze 5b angeordnet und verteilt sind. Die umlaufenden Vertiefungen 6, 6', 6", welche im Wesentlichen einen Bodenabschnitt 6.1 und einen Wandabschnitt 6.2 aufweisen, unterscheiden sich in Querschnittsgröße und -form, wobei alle Querschnittsformen der drei Vertiefungen 6, 6', 6" des dargestellten Beispieles näherungsweise die Form eines Kreisabschnittes aufweisen.

Eine senkrecht zur Längsachse LA der Walze 5b und durch den Bodenabschnitt 6.1 der Vertiefungen 6, 6', 6" verlaufende Schnittebene SE, SE', SE" quer durch die Walze 5b stellt eine Symmetrieebene der Vertiefungen 6, 6', 6" bzw. eine Symmetrieachse bezüglich der Querschnittsform der Vertiefungen 6, 6', 6" dar. Die erfindungsgemäße Zuführung des monofilen Stranges 7 in die Vertiefungen 6, 6', 6" der Walze 5b mit Hilfe der Zuführungs- und Positionierungseinrichtung 10 erfolgt an einer gedachten Schnittlinie der Symmetrie- bzw. Schnittebenen SE, SE', SE" mit den Bodenabschnitten 6.1 der Vertiefungen 6, 6', 6", nämlich zentrisch in die Vertiefungen 6, 6', 6".

Je nach Bedarf, nämlich je nach Art des herzustellenden Wickelbandes 1 kann der monofile Strang 7 mit Hilfe der Zuführungs- und Positionierungseinrichtung 10 zentrisch in eine entsprechend benötigte Vertiefung 6, 6', 6" der Walze 5b eingeführt werden. So kann beispielsweise für dünne, schmale Wickelbänder 1 die umlaufende Vertiefung 6 die zur Formgebung korrekte Vertiefung sein, wohin gegen die umlaufende Vertiefung 6' vornehmlich zur Herstellung breiterer, dickerer Wickelbänder 1 benutzt wird.

In den Figuren 3a bis 3c sind Querschnittsdarstellungen verschiedener Ausführungsformen ausgepresster monofiler Stränge 7 gezeigt. Gemäß der vorliegenden Erfindung wird die Querschnittsform des ausgepressten monofilen Stranges 7 näherungsweise auf die Form der umlaufenden Vertiefung 6 der zumindest zweiten Walze 5b abgestimmt, so dass das Auswalzen mittels der Walzen 5a, 5b in einer optimierten Weise effektiv durchgeführt werden kann. Die Querschnittsform des monofilen Stranges wird durch die Form der Austrittsöffnung 9a der Düse 9 bestimmt, wobei eine Länge I des Querschnittes des monofilen Stranges 7 gleichzeitig die Länge I der Austrittsöffnung 9a der Düse 9 und eine Breite b des Querschnittes des monofilen Stranges 7 gleichzeitig die Breite b der Austrittsöffnung 9a der Düse 9 darstellt.

In der Figur 3a ist ein monofiler Strang 7 mit im Wesentlichen ovaler Querschnittsform gezeigt. Das Verhältnis von Breite b zu Länge I liegt bevorzugt in einem Bereich von 1:1,05 bis 1:5, besonders bevorzugt in einem Bereich von 1:1,1 bis 1:3, im dargestellten Beispiel beträgt das Verhältnis von Breite b zu Länge I 1:2. Die Figuren 3b und 3c zeigen Beispiele von monofilen Strängen 7 mit näherungsweise rechteckiger Querschnittsform, wobei das Verhältnis von Breite b zu Länge I bevorzugt in einem Bereich von 1:1 bis 1:15, besonders bevorzugt in einem Bereich von 1:1 bis 1:10, im dargestellten Beispiel der Figur 3b beträgt das Verhältnis von Breite b zu Länge I 1:1, im Beispiel der Figur 3c beträgt es 1:5.

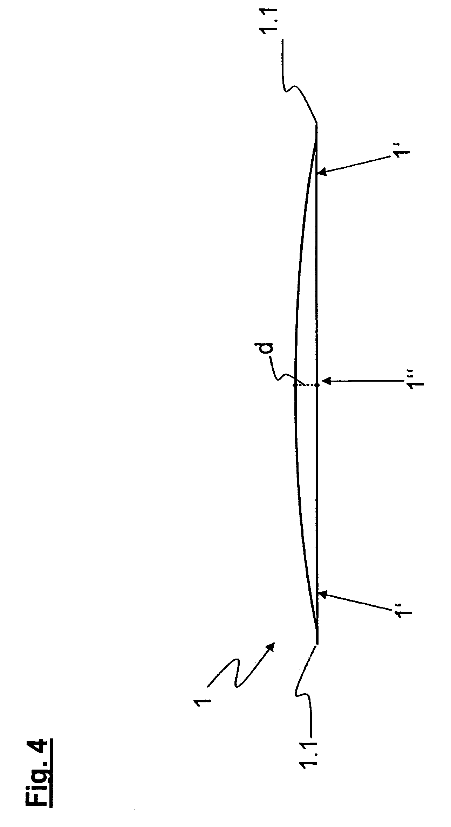

Die Figur 4 zeigt einen Querschnitt eines nach dem erfindungsgemäßen Verfahren der Figur 1 hergestellten Wickelbandes 1. Mittels der starren Walzen 5a, 5b wird der monofile Strang 7 derart zu dem Wickelband 1 ausgewalzt, dass das Wickelband 1 zumindest teilweise eine durch die Vertiefung 6 der zumindest zweiten Walze 5b und die Umfangsfläche der ersten Walze 5a vorgegebene Form annimmt. Das Wickelband 1 des dargestellten Beispieles weist eine im Wesentlichen plankonvexe Querschnittsform mit einer gekrümmten und einer glatten Seite auf. Die plankonvexe Querschnittsform wird bedingt durch die durch die Vertiefung 6 der zweiten starren Walze 5b und die Umfangsfläche der starren und zylinderförmig, glatten ersten Walze 5a vorgegebene Form.

Das Wickelband 1 weist einen dickeren mittleren Bereich 1' und zwei diesen eingrenzende dünnere Randbereiche 1" auf. Die Randbereiche 1" flachen nach außen hin zunehmend ab und enden schließlich in den Wickelbandrändern 1.1. Bevorzugt beträgt die Dicke d im mittleren Bereich 1' zwischen 30 µm und 200 µm und die Dicke d im Randbereich 1" zwischen 5 µm und 30 µm. Die Wickelbandränder 1.1 weisen besonders bevorzugt eine Dicke d von kleiner oder gleich 5 µm auf und laufen vorzugsweise mit einer gegen 0 gehenden Dicke d aus..

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

### Bezugszeichenliste

- 1: Wickelband
- 1': mittlerer Bereich
- 1": Randbereich
- 1.1: Wickelbandrand
- 2: Rohlingspresse
- 3: Rohling
- 4: Monofilpresse
- 5: Kalanderwalzenanordnung
- 5a, 5b: erste und zweite Walze
- 5c: Abnehmer
- 5d: Aufwickler
- 5e: Führungsrolle
- 6, 6', 6": umlaufende Vertiefung
- 6.1: Bodenabschnitt
- 6.2: Wandabschnitt
- 7: monofiler Strang
- 8: Einfüllvorrichtung
- 9: Düse
- 9a: Austrittsöffnung
- 10: Zuführungs- und Positionierungseinrichtung
- 11: Träger- und Stützhülse
- 12: Druckmess und -regelungseinrichtung
- b: Breite
- d: Dicke
- I: Länge
- LA: Längsachse
- SE, SE', SE": Schnittebenen

## Patentansprüche

1. Verfahren zur Herstellung eines Wickelbandes (1), bei dem aus einem Materialgemisch, vorzugsweise aus einem Gemisch aus ungesintertem Polytetrafluorethylenpulver und einem Gleitmittel zunächst ein zylinderförmiger Rohling (3) gepresst wird, der Rohling (3) dann zu einem geringer dimensionierten monofilen Strang (7) mit vorgegebener Querschnittsform ausgepresst wird und der monofile Strang (7) anschließend in einer Kalanderwalzenanordnung (5) mit zumindest einer ersten und einer zweiten starren Walze (5a, 5b) zu einem Wickelband (1) ausgewalzt wird, **dadurch gekennzeichnet, dass** der monofile Strang (7) einer auf der Umfangsfläche der zumindest zweiten Walze (5b) vorgesehenen umlaufenden Vertiefung (6) zugeführt wird und mittels beider Walzen (5a, 5b) derart zu dem Wickelband (1) ausgewalzt wird, dass das Wickelband zumindest teilweise eine durch die Vertiefung (6) der zumindest zweiten starren Walze (5b) und die Umfangsfläche der ersten starren Walze (5a) vorgegebene Form annimmt, wobei die Querschnittsform des ausgepressten monofilen Stranges (7) näherungsweise auf die Form der umlaufenden Vertiefung (6) abgestimmt wird.

2. Verfahren nach Anspruch 1, **dadurch gekennzeichnet, dass** der auf der Umfangsfläche der zumindest zweiten Walze (5b) vorgesehenen umlaufenden Vertiefung (6) ein monofiler Strang (7) mit im Wesentlichen ovaler Querschnittsform zugeführt wird.

3. Verfahren nach Anspruch 1, **dadurch gekennzeichnet, dass** der auf der Umfangsfläche der zumindest zweiten Walze (5b) vorgesehenen umlaufenden Vertiefung (6) ein monofiler Strang (7) mit im Wesentlichen polygoner, vorzugsweise rechteckiger Querschnittsform zugeführt wird.

4. Verfahren nach einem der Ansprüche 1 bis 3, **dadurch gekennzeichnet, dass** der ausgepresste monofile Strang (7) mittels einer Zuführungs- und Positionierungseinrichtung (10) der auf der Umfangsfläche der zumindest zweiten Walze (5b) vorgesehenen umlaufenden Vertiefung (6) zugeführt wird.

5. Verfahren nach Anspruch 4, **dadurch gekennzeichnet, dass** der ausgepresste monofile Strang (7) mittels der Zuführungs- und Positionierungseinrichtung (10) zentrisch in der umlaufenden Vertiefung (6) positioniert wird.

6. Verfahren nach einem der vorhergehenden Ansprüche, **dadurch gekennzeichnet, dass** über eine Druckmess und -regelungseinrichtung der Pressdruck in der Rohlingspresse bestimmt wird und für die Dauer eines definierten Zeitraumes auf einem vorgegebenen Wert gehalten wird.

7. Verfahren nach einem der vorhergehenden Ansprüche, **dadurch gekennzeichnet, dass** der gepresste zylinderförmige Rohling (3) aus der Rohlingspresse (2) entnommen und zunächst in eine Träger- und Stützhülse (11) eingeschoben wird.

8. Verfahren nach einem der vorhergehenden Ansprüche, **dadurch gekennzeichnet, dass** der monofile Strang (7) in der Monofilpresse (4) mittels einer Düse (9) mit vorgegebener Austrittsöffnung (9a) ausgepresst wird, wobei die Pressgeschwindigkeit und/oder das Reduktionsverhältnis reguliert werden.

9. Vorrichtung zur Herstellung eines Wickelbandes (1) nach dem Verfahren gemäß den Ansprüchen 1 bis 8 umfassend zumindest eine Rohlingspresse (2), wenigstens eine Monofilpresse (4) mit einer Düse (9) aufweisend eine vorgegebene Austrittsöffnung (9a) und eine Kalanderwalzenanordnung (5) mit zumindest einer ersten und einer zweiten starren Walze (5a, 5b), **dadurch gekennzeichnet, dass** wenigstens die zweite starre Walze (5b) zumindest eine umlaufende Vertiefung (6) auf ihrer Umfangsfläche aufweist.

10. Vorrichtung nach Anspruch 9, zusätzlich umfassend eine Zuführungs- und Positionierungseinrichtung (10) zur Zuführung des ausgepressten monofilen Stranges (7) in die umlaufende Vertiefung (6) der zweiten Walze (5b) der Kalanderwalzenanordnung (5).

11. Vorrichtung nach Anspruch 9 oder 10, **dadurch gekennzeichnet, dass** die Düse (9) der Monofilpresse (4) eine Austrittsöffnung (9a) mit im wesentlichen ovaler Querschnittsform aufweist, wobei das Seitenverhältnis von Länge (I) zu Breite (b) der Austrittsöffnung (9a) in einem Bereich von 1,1:1 bis 2:1 liegt.

12. Vorrichtung nach Anspruch 9 oder 10, **dadurch gekennzeichnet, dass** die Düse (9) eine Austrittsöffnung (9a) mit im wesentlichen polygonem, vorzugsweise rechteckförmigem Querschnitt aufweist, wobei das Seitenverhältnis von Länge (I) zu Breite (b) der Austrittsöffnung (9a) in einem Bereich von 1:1 bis 10:1 liegt..

13. Vorrichtung nach einem der Ansprüche 9 bis 12, **dadurch gekennzeichnet, dass** zwei, drei oder mehrere umlaufende Vertiefungen (6, 6', 6") auf der Umfangsfläche der zweiten Walze (5b) ausgebildet sind, wobei die umlaufenden Vertiefungen (6, 6', 6") entlang einer Längsachse (LA) der Walze (5b) verteilt angeordnet sind.

14. Vorrichtung nach einem der Ansprüche 9 bis 13, **dadurch gekennzeichnet, dass** jede umlaufende Vertiefung (6, 6', 6") eine vorgegebene Querschnittsform aufweist, wobei eine durch die Vertiefung (6) verlaufende und senkrecht zur Längsachse der Walze (5b) ausgerichtete Schnittebene (SE, SE', SE") eine Symmetrieachse bezüglich der Querschnittsform der Vertiefung (6) darstellt.

15. Vorrichtung nach Anspruche 14, **dadurch gekennzeichnet, dass** der Querschnitt der umlaufenden Vertiefung (6, 6', 6") im Wesentlichen die Form eines Kreisabschnittes aufweist.

## Claims

1. A method for producing a wrapping tape (1), wherein first a cylindrical blank (3) is pressed from a material mixture, preferably a mixture of an unsintered polytetrafluoroethylene powder and a lubricant, the blank (3) is then pressed so as to form a smaller sized monofilament strand (7) with a predetermined cross-sectional shape and the monofilament strand (7) is subsequently rolled in a calender roll arrangement (5) having at least one first and one second fixed roll (5a, 5b) so as to form a wrapping tape (1), **characterized in that** the monofilament strand (7) is fed to a circumferentially extending recess (6) provided on the circumferential surface of the at least second roll (5b) and is rolled by means of both rolls (5a, 5b) so as to form the wrapping tape (1) in such a manner that the wrapping tape adopts at least partially a shape predetermined by the recess (6) of the at least second fixed roll (5b) and the circumferential surface of the first fixed roll (5a), wherein the cross-sectional shape of the pressed monofilament strand (7) is approximately adjusted to the shape of the circumferentially extending recess (6).

2. The method according to claim 1, **characterized in that** a monofilament strand (7) having a substantially oval cross-sectional shape is fed to the circumferentially extending recess (6) provided on the circumferential surface of the at least second roll (5b).

3. The method according to claim 1, **characterized in that** a monofilament strand (7) having a substantially polygonal, preferably rectangular, cross-sectional shape is fed to the circumferentially extending recess (6) provided on the circumferential surface of the at least second roll (5b).

4. The method according to any one of claims 1 to 3, **characterized in that** the pressed monofilament strand (7) is fed to the circumferentially extending recess (6) provided on the circumferential surface of the at least second roll (5b) by means of a feeding and positioning device (10).

5. The method according to claim 4, **characterized in that** the pressed monofilament strand (7) is positioned centrally in the circumferentially extending recess (6) by means of the feeding and positioning device (10).

6. The method according to any of the preceding claims, **characterized in that** the pressing pressure in the blank press is determined via a pressure measuring and controlling device and is maintained at a predetermined value over the duration of a defined period of time.

7. The method according to any one of the preceding claims, **characterized in that** the pressed cylindrical blank (3) is removed from the blank press (2) and is first inserted into a carrier and support sleeve (11).

8. The method according to any one of the preceding claims, **characterized in that** the monofilament strand (7) is pressed in the monofilament press (4) by means of a nozzle (9) having a predetermined outlet opening (9a), wherein the pressing speed and/or the reduction ratio are controlled.

9. A device for producing a wrapping tape (1) according to the method according to claims 1 to 8, comprising at least one blank press (2), at least one monofilament press (4) with a nozzle (9) having a predetermined outlet opening (9a), and a calender roll arrangement (5) with at least one first and a second fixed roll (5a, 5b), **characterized in that** at least the second fixed roll (5b) has at least one circumferentially extending recess (6) on its circumferential surface.

10. The device according to claim 9, additionally comprising a feeding and positioning device (10) for feeding the pressed monofilament strand (7) into the circumferentially extending recess (6) of the second roll (5b) of the calender roll arrangement (5).

11. The device according to claim 9 or 10, **characterized in** hat the nozzle (9) of the monofilament press (4) has an outlet opening (9a) with a substantially oval cross-sectional shape, wherein the aspect ratio of length (I) to width (b) of the outlet opening (9a) lies in a range of from 1.1 : 1 to 2 : 1.

12. The device according to claim 9 or 10, **characterized in that** the nozzle (9) has an outlet opening (9a) with a substantially polygonal, preferably rectangular, cross-sectional shape, wherein the aspect ratio of length (I) to width (b) of the outlet opening (9a) lies in a range of from 1 : 1 to 10 : 1.

13. The device according to any one of claims 9 to 12, **characterized in that** two, three or more circumferentially extending recesses (6, 6', 6") are formed on the circumferential surface of the second roll (5b), wherein the circumferentially extending recesses (6, 6', 6") are arranged distributed along a longitudinal axis (LA) of the roll (5b).

14. The device according to any one of claims 9 to 13, **characterized in that** each circumferentially extending recess (6, 6', 6") has a predetermined cross-sectional shape, wherein a section plane (SE, SE', SE") running through the recess (6) and oriented perpendicular to the longitudinal axis of the roll (5b) represents an axis of symmetry with respect to the cross-sectional shape of the recess (6).

15. The device according to claim 14, **characterized in that** the cross-section of the circumferentially extending recess (6, 6', 6") has substantially the shape of a segment of a circle.

## Revendications

1. Procédé de fabrication d'une bande d'enroulement (1), dans lequel, à partir d'un mélange de matériaux, de préférence à partir d'un mélange de poudre de polytétrafluoroéthylène non frittée et d'un agent de glissement, une ébauche de forme cylindrique (3) est d'abord pressée, l'ébauche (3) est ensuite coulée en une barre monofilaire (7) de dimensions plus réduites ayant une forme de section transversale prédéfinie et la barre monofilaire (7) est ensuite laminée dans un dispositif de rouleaux de calandre (5) comportant au moins un premier et un second rouleaux rigides (5a, 5b) pour former une bande d'enroulement (1), **caractérisé en ce que** la barre monofilaire (7) est acheminée dans un creux périphérique (6) prévu sur la surface circonférentielle de l'au moins un second rouleau (5b) et coulée au moyen des deux rouleaux (5a, 5b) pour former la bande d'enroulement (1) de manière à ce que la bande d'enroulement prenne du moins partiellement une forme prédéfinie par le creux (6) de l'au moins un second rouleau rigide (5b) et par la surface circonférentielle du premier rouleau rigide (5a), la forme de section transversale de la barre monofilaire coulée (7) étant pratiquement adaptée à la forme du creux périphérique (6).

2. Procédé selon la revendication 1, **caractérisé en ce qu'**une barre monofilaire (7) à forme de section transversale sensiblement ovale est acheminée vers le creux périphérique (6) prévu sur la surface circonférentielle de l'au moins un second rouleau (5b).

3. Procédé selon la revendication 1, **caractérisé en ce qu'**une barre monofilaire (7) à forme de section transversale sensiblement polygonale, de préférence rectangulaire, est acheminée vers le creux périphérique (6) prévu sur la surface circonférentielle de l'au moins un second rouleau (5b).

4. Procédé selon une des revendications 1 à 3, **caractérisé en ce que** la barre monofilaire coulée (7) est acheminée au moyen d'un dispositif d'acheminement et de positionnement (10) vers le creux périphérique (6) prévu sur la surface circonférentielle de l'au moins un second rouleau (5b).

5. Procédé selon la revendication 4, **caractérisé en ce que** la barre monofilaire coulée (7) est positionnée au moyen du dispositif d'acheminement et de positionnement (10) de manière centrée dans le creux périphérique (6).

6. Procédé selon une des revendications précédentes, **caractérisé en ce que** la force de compression dans la presse à ébauche est définie au moyen d'un dispositif de mesure et de réglage de pression et maintenu à une valeur prédéfinie pendant la durée d'une période définie.

7. Procédé selon une des revendications précédentes, **caractérisé en ce que** l'ébauche de forme cylindrique pressée (3) est sortie de la presse à ébauches (2) et est d'abord glissée dans un manchon de support et de soutien (11).

8. Procédé selon une des revendications précédentes, **caractérisé en ce que** la barre monofilaire (7) est coulée dans la presse monofilaire (4) au moyen d'une filière (9) dotée d'un orifice de sortie prédéfini (9a), la vitesse de pressage et/ou le rapport de réduction étant régulés.

9. Dispositif de fabrication d'une bande d'enroulement (1) suivant le procédé selon les revendications 1 à 8, comprenant au moins une presse à ébauches (2), au moins une presse monofilaire (4) avec une filière (9) présentant un orifice de sortie prédéfini (9a) et un dispositif de rouleaux de calandre (5) comportant au moins un premier et un second rouleaux rigides (5a, 5b), **caractérisé en ce qu'**au moins le second rouleau rigide (5b) présente au moins un creux périphérique (6) sur sa surface circonférentielle.

10. Dispositif selon la revendication 9, présentant en outre un dispositif d'acheminement et de positionnement (10) pour acheminer la barre monofilaire coulée (7) dans le creux périphérique (6) du second rouleau (5b) du dispositif de rouleaux de calandre (5).

11. Dispositif selon la revendication 9 ou 10, **caractérisé en ce que** la filière (9) de la presse monofilaire (4) présente un orifice de sortie (9a) ayant une forme de section transversale sensiblement ovale, le rapport latéral de la longueur (I) à la largeur (b) de l'orifice de sortie (9a) se situant dans une fourchette de 1,1 : 1 à 2 : 1.

12. Dispositif selon la revendication 9 ou 10, **caractérisé en ce que** la filière (9) présente un orifice de sortie (9a) à section transversale sensiblement polygonale, de préférence rectangulaire, le rapport latéral de la longueur (I) à la largeur (b) de l'orifice de sortie (9a) se situant dans une fourchette 1 : 1 à 10 : 1.

13. Dispositif selon une des revendications 9 à 12, **caractérisé en ce que** deux, trois ou plusieurs de creux périphériques (6, 6', 6") sont pratiqués sur la surface circonférentielle du second rouleau (5b), les creux périphériques (6, 6', 6") étant disposés répartis le long d'un axe longitudinal (LA) du rouleau (5b).

14. Dispositif selon une des revendications 9 à 13, **caractérisé en ce que** chaque creux périphérique (6, 6', 6") présente une forme de section transversale prédéfinie, un plan de coupe (SE, SE', SE") s'étendant dans le creux (6) et orienté perpendiculairement à l'axe longitudinal du rouleau (5b) constituant un axe de symétrie par rapport à la forme de section transversale du creux (6).

15. Dispositif selon la revendication 14, **caractérisé en ce que** la section transversale du creux périphérique (6, 6', 6") présente substantiellement la forme d'une section de cercle.
